# EUROPEAN PATENT SPECIFICATION

(11) **EP 1 787 826 B1**
(45) Date of publication and mention of the grant of the patent: **16.06.2010**
(21) Application number: 05768776.6
(22) Date of filing: 02.08.2005
(51) Int. Cl.: B60C 11/12

(54) **PNEUMATIC TIRE**
LUFTREIFEN
PNEU

(30) Priority: 25.08.2004 JP 2004245706
(43) Date of publication of application: 23.05.2007
(73) Proprietor: Bridgestone Corporation, Tokyo 104-8340 (JP)
(72) Inventor: TANABE, Nobutaka, c/o BRIDGESTONE CORPORATION, Tokyo 1048340 (JP)
(74) Representative: Whalley, Kevin
(86) International application number: PCT/JP2005/014081
(87) International publication number: WO 2006/022120

(56) References cited:
- EP-A- 1 733 900
- JP-A- 9 142 110
- JP-A- 2001 063 322
- JP-A- 2002 321 509
- JP-A- 2005 041 393
- JP-A- 2005 153 787
- JP-A- 2005 205 988

## Description

The present invention relates to a pneumatic tire having sipes in its tread section. More particularly, the present invention relates to a pneumatic tire suitably used as a winter (snow and ice) tire that requires enhanced performance on snow and icy roads.

Pneumatic tires suitable for running on snow and icy roads are commonly used. Winter tires have been used as such pneumatic tires.

In order to ensure adequate performance on snow and icy roads, conventional winter tires have plural sipes in their tread sections for decreasing block rigidity so that edge effects of the tread section and sipes are improved.

However, if the tread section has plural sipes, the block rigidity decreases as the number of sipes increases. Thus brake performance and drivability on dry roads and wet roads are affected. Consequently, it is difficult to achieve adequate performance on snow and icy roads (hereinafter, referred to as "performance on snow and icy roads") and adequate performance on dry roads and wet roads (hereinafter, referred to as "performance on dry/wet roads") at the same time.

To address such problems, providing wave-like 3D sipes or 3D sipes of other shapes in the depth direction of tires has been proposed (see, for example, Japanese Patent Application Laid-Open (JP-A) Nos. 2002-321509 and 63-235107 (Japanese Patent Application Publication (JP-B) No. 7-41778), WO 94/21478, European Patent Application No. 768958A and United States Patent No. 5350001).

The 3D sipes are structured to ensure block rigidity while maintaining edge effects of the block surface at the same level as those of blocks having normal sipes. With such 3D sipes, difficulty in achieving adequate performance on snow and icy roads and performance on dry/wet roads at the same time is mitigated.

However, if too many 3D sipes are formed, block rigidity may often be increased and, eventually, performance on snow and icy roads may become affected, causing an opposite result in respect of the performance. It is thus needed to determine effective configuration and number of 3D sipes.

In view of the aforementioned, it is an object of the invention to provide a pneumatic tire in which adequate performance on snow and icy roads and adequate performance on dry/wet roads are effectively achieved at the same time.

Attention is also drawn to the disclosure of EP-1 733 900 A, which was however only published after the data of filing of one present application.

The present inventor noted that performance on snow and icy roads or performance on dry/wet roads, each of which is required for pneumatic tires, and block rigidity of the tread section are in the following relationships:
1. To ensure performance on snow and icy roads, block rigidity must be lowered; and
2. To ensure performance on dry/wet roads, block rigidity must be increased.

As a result of intensive study, the present inventor devised a distribution of block rigidity of the tread section for achieving adequate performance on snow and icy roads and adequate performance on dry/wet roads at the same time. The invention was made based on several experiments.

The present invention is a pneumatic tire in which at least three arrays of land portions are defined in a tread of a tread section along a circumferential direction of the tire by main grooves continuously formed in the circumferential direction of the tire, wherein 3D sipes are formed in land portions provided at both tread end sides in a width direction of the tire; and 1D sipes or 2D sipes, or alternatively sipes comprising a combination of 1D and 2D sipes, are formed in the land portions provided at a tire equator side with respect to the 1 and portions provided at both tread end sides, wherein the ID and the 2D sipes are formed to extend in a diagonal direction with respect to a tread width direction.

As used herein, 3D sipes refer to sipes extending in three dimensions (a circumferential direction, a width direction and a depth direction of a tire) while undergoing transformation. 2D sipes refer to sipes extending in two dimensions while undergoing transformation. 1D sipes refer to sipes extending in a single direction without undergoing transformation.

A given area is defined in view of, for example, density of the sipe provision, dimension of the tread block and rigidity of the tread block.

Generally, the relationship of the block rigidity of different types of sipes is as follows:
3D sipes > 2D sipes > ID sipes
As regards the block rigidity, a tread block with 3D sipes is highest, a tread block with 2D sipes is the second-highest, and a tread block with 1D sipes is the lowest.

Thus, according to the invention, since the tread has varying rigidity across its land portions, performance on snow and icy roads can be ensured by the land portion with lower rigidity, and performance on dry/wet roads can be ensured by the land portion with higher rigidity. As a result, adequate performance on snow and icy roads and adequate performance on dry/wet roads can be effectively achieved at the same time in the pneumatic tire. These effects may be enhanced by controlled combinations of sipes.

All of the sipes formed in the land portions at both tread end sides are suitably 3D sipes.

Thus, rigidity of the land portion can be increased sufficiently.

All of the sipes formed in the land portions at the tire equator side with respect to both tread end sides are suitably 2D sipes.

Thus, rigidity of the land portion in an area further toward the tire equator can be reduced sufficiently.

When all of the sipes formed in land portions continuously formed from the tread end portion in the width direction of the tire are 3D sipes, since the shoulder portion that mainly contacts the ground during cornering has sufficient rigidity, performance on dry/wet roads can be improved effectively.

When all of the sipes of the land portions provided at the tire equator side with respect to the land portions in which 3D sipes are formed are 2D sipes, the edge effects can be sufficiently working during traveling on snow and icy roads that suffer from smaller lateral force than on dry/wet roads.

The 3D sipes may extend in a crank shape in a depth direction of the tire, whereby, required block rigidity can be defined.

If transverse grooves are formed across each land portion and the land portion is formed as block arrays along the circumferential direction of the tire, adequate performance on wet roads can be obtained through sufficient drainage effects of the transverse grooves while ensuring required performance on snow and icy roads.

The present inventor also noted the following relationships:
1. Since start and acceleration/braking performance at lower gears is important for the performance on snow and icy roads, rigidity at the tread center portion largely contributes to the performance on snow and icy roads; and
2. Since start and acceleration/braking performance and responsiveness at higher gears is important for the performance on dry/wet roads, rigidity at the tread shoulder portion largely contributes to the performance on dry/wet roads.

The present inventor found that, because the block rigidity of a width direction central area of a tread section mainly contributes to the performance on snow and icy roads, it is effective to lower the block rigidity of the central area of the tread section so that the edge effect is exhibited enough to ensure adequate performance on snow and icy roads. Additionally, because the block rigidity of a width direction outer side of the tread section mainly contributes to the performance on dry/wet roads, it is effective to increase the block rigidity of the outer side of the tread section to ensure the performance on dry/wet roads.

Therefore, each of the blocks constituting the block arrays of the width direction outermost side of the tire may include 3D sipes, and each of the blocks constituting the block arrays nearest to the tire equator may include at least one of 1D sipes extending without undergoing transformation both in the depth direction of the sipes and in the longitudinal direction of the sipes on the tread surface and 2D sipes extending while undergoing transformation in the longitudinal direction of the sipes on the tread surface and without undergoing transformation in the depth direction of the sipes. In this manner, the block rigidity at the width direction central area of the tread section can be reduced and the block rigidity at the width direction outer side of the tread section can be increased with a simple structure. As a result, a pneumatic tire can be obtained in which adequate performance on snow and icy roads and adequate performance on dry/wet roads are effectively achieved at the same time with a simple structure.

If additional block array(s) are formed in an area between the block arrays of the width direction outermost side of the tire and the block arrays nearest to the tire equator, types and number of sipes may be defined such that the block rigidity of these intermediate block arrays are at an intermediate level between those of the block arrays of the width direction outermost side of the tire and the block arrays nearest to the tire equator. In this case, it is effective to make the ratio and the number of 3D sipes of the intermediate block arrays different from those of the block arrays of the width direction outermost side of the tire.

The 2D sipes or the 3D sipes may extend on the tread surface in a shape of a wave, circular arc, triangle or trapezoid. Thus, edge components of the tire tread required for traveling on snow and icy roads can be ensured.

Note that, "the sipes extending in a shape of wave" means that the sipes extend in the longitudinal direction thereof while alternately bending back and forth in a wave pattern. "The sipes extending in a circular arc" means that the sipes extend in the longitudinal direction thereof while alternately bending back and forth in a circular-arc (e.g., a semicircular-arc) shape. "The sipes extending in a shape of triangle" means that the sipes extend in the longitudinal direction thereof while alternately bending back and forth such that incline directions of portions of the sipes that are inclined with respect to the longitudinal direction of the sipe are different from each other. "The sipes extending in a shape of trapezoid" means that the sipes extend in a staggered shape, and that a sipe portion extending in the same direction as the longitudinal direction of the sipe and sipe portions that are inclined with respect to the longitudinal direction of the sipe together form a sipe combination and the sipe combinations extend in the longitudinal direction of the sipe so as to be different from each sipe combination, whereby sipe combinations are arranged in a staggered manner.

With the structure described above, a pneumatic tire can be obtained in which adequate performance on snow and icy roads and adequate performance on dry/wet roads are effectively achieved at the same time.

The invention will be further described with reference to the accompanying drawings, wherein

Fig. 1 is a radial direction cross-sectional view of a pneumatic tire according to a first embodiment.
Fig. 2 is a plan view of a tread pattern of the pneumatic tire according to the first embodiment.
Fig. 3A is a perspective view illustrating the shapes of 3D sipes formed in the pneumatic tire according to the first embodiment.
Fig. 3B is a side cross-sectional view taken from line 3B-3B in Fig. 3A.
Fig. 4 is a plan view of a tread pattern of a pneumatic tire according to a second embodiment.
Fig. 5 is a plan view of a tread pattern of a pneumatic tire according to a third embodiment.
Fig. 6A is a perspective view illustrating the shapes of 3D sipes formed in the pneumatic tire according to a fourth embodiment.
Fig. 6B is a side cross-sectional view taken from line 6B-6B in Fig. 6A.
Fig. 7A is a perspective view illustrating the shapes of 3D sipes formed in the pneumatic tire according to a fifth embodiment.
Fig. 7B is a side cross-sectional view taken from line 7B-7B in Fig. 7A.

Exemplary embodiments of the invention will be described with reference to the drawings. Note that, in the second to fifth embodiments, components that are similar to those already described will be denoted by similar reference numerals and description thereof will be omitted.

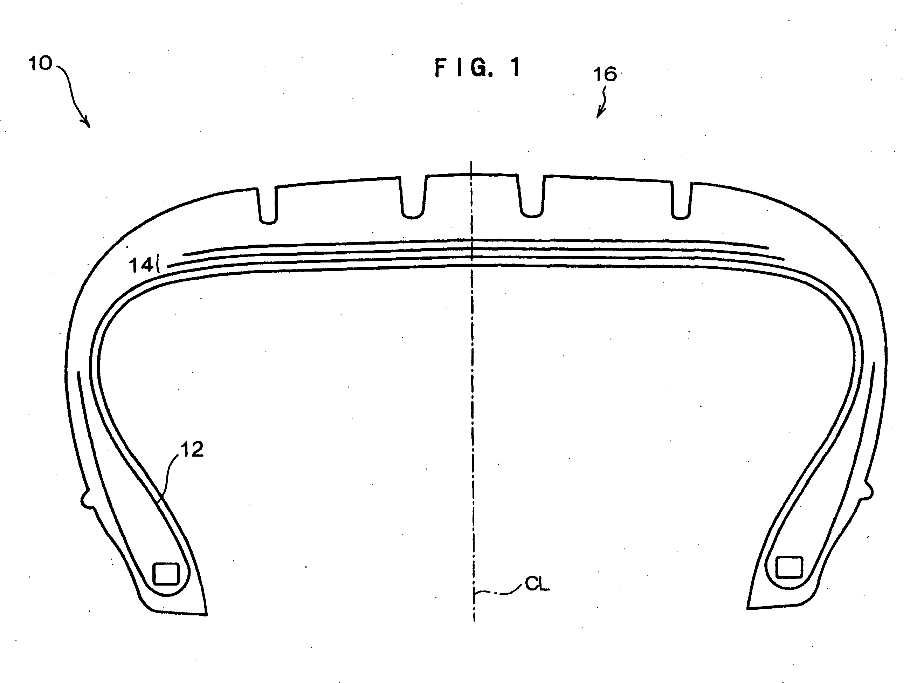

As shown in Fig. 1, pneumatic tire 10 according to a first embodiment includes carcass 12 which extends in a toroidal shape, belt 14 provided at an outside of a crown portion of carcass 12, and tread section 16 provided outside of belt 14 and continues in a toroidal manner between side wall portions.

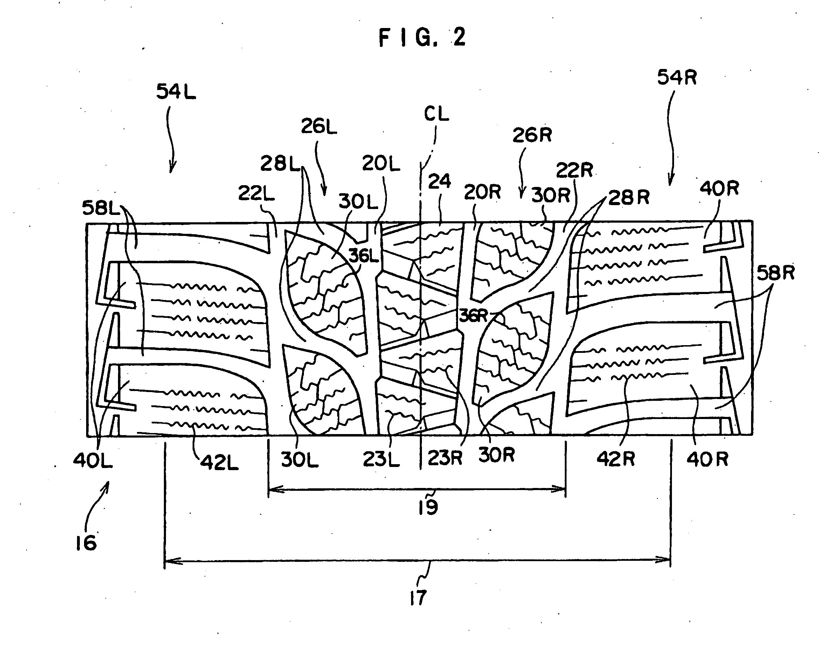

As shown in Fig. 2, center area 19 of tread 17 of tread section 16 includes center main grooves 20L and 20R formed symmetrically with respect to tire equator surface CL and extending in the circumferential direction of the tire. Shoulder main grooves 22L and 22R extending in the circumferential direction of the tire are formed in the tire width direction outer side of center main grooves 20L and 20R, respectively. In addition, lug grooves 28L connecting center main groove 20L and shoulder main groove 22L, and lug grooves 28R connecting center main groove 20R and shoulder main groove 22R are formed in center area 19.

Thus, in center area 19 of tread 17, there are provided center land portion 24, second block array 26L and second block array 26R. Center land portion 24 is defined by center main grooves 20L and 20R and positioned on tire equator surface CL. Second block array 26L is defined by center main groove 20L, shoulder main groove 22L and lug grooves 28L. Second block array 26R is defined by center main groove 20R, shoulder main groove 22R and lug grooves 28R.

Second block arrays 26L and 26R are each formed by an array of second blocks 30.

Lug grooves 58L connecting shoulder main groove 22L and an end of a ground contact area are formed in tread section 16. Shoulder block array 54L in which shoulder blocks 40 are arranged linearly is formed at the tire width direction outer side of shoulder main groove 22L. Also, lug grooves 58R connecting shoulder main groove 22R and an end of a ground contact area are formed in tread section 16. Shoulder block array 54R is formed at the tire width direction outer side of shoulder main groove 22R.

The outer ends of lug grooves 58L and 58R in the width direction of the tire are positioned further toward the outer side of the tread end in the width direction of the tire. Here, the tread end means a ground contact area of a pneumatic tire positioned at a width direction outermost side of the tire, the pneumatic tire being fitted to a standard rim provided in JATMA YEAR BOOK (2002, Standards of The Japan Automobile Tire Manufacturers Association), filled with 100% of air pressure (maximum air pressure) corresponding to the maximum load performance (load indicated in boldface in the internal pressure - load performance table) at an applied size/Ply Rating in JATMA YEAR BOOK, and loaded with the maximum load performance. Note that, if TRA Standard or ETRTO Standard is applied at the place of usage or production of the tire, each Standard will be complied with.

3D sipes 42L are formed in shoulder blocks 40L constituting shoulder block array 54L, and 3D sipes 42R are formed in shoulder blocks 40R constituting shoulder block array 54R.

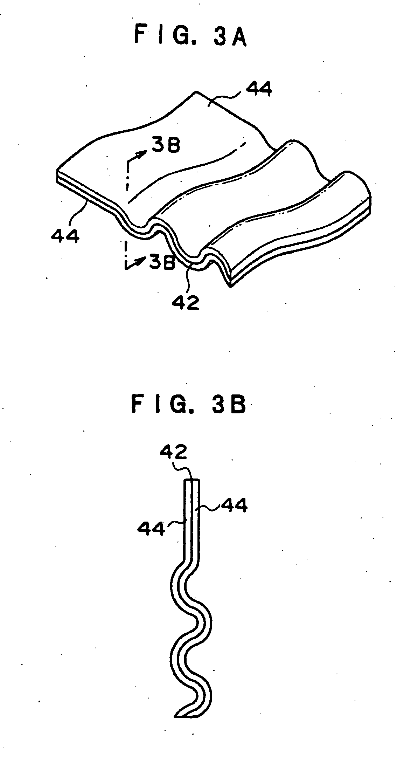

As shown in Figs. 3A and 3B, 3D sipes 42L and 42R run like a wave in the width direction of the tire and extend in the depth direction of the block (depth direction of the tire) as a plane at the surface of the block and like a wave at an inner portion of the block deeper than the block surface. Thus, washboard-like block plate portions 44 formed by 3D sipes 42 are arranged in a parallel manner.

2D sipes 36L are formed in second blocks 30L constituting second block array 26L.

2D sipes 36L extend like a wave substantially in a similar extending direction as the lug grooves 28R and extend as a plane with respect to the depth direction of the block (depth direction of the tire). Thus, shapes and positions of the sipes are the same as those of the block surface in any cross-section along the surface of second blocks 30.

Second blocks 30R constituting second block array 26R and second blocks 30L are symmetric with respect to tire equator surface CL. 2D sipes 36R that are equivalent to 2D sipes 36L are formed in second blocks 30R.

In center land portion 24, several 2D sipes 23L extending substantially along the direction of lug grooves 28L in a wave pattern and several 2D sipes 23R extending substantially along the direction of lug grooves 28R in a wave pattern are formed alternately along the circumferential direction of the tire

As described above, in the present embodiment, the sipes formed in shoulder block arrays 54L and 54R are 3D sipes, the sipes formed in second block arrays 26L and 26R are 2D sipes, and the sipes formed in center land portion 24 are 2D sipes. Thus, block rigidity is highest at shoulder block arrays 54L and 54R, is lowest at center land portion 24, and is intermediate at second block arrays 26L and 26R.

With this structure, an adequate edge effect on snow and icy roads is provided by center land portion 24 and second block arrays 26L and 26R, and adequate brake performance and drivability on dry/wet roads are provided by shoulder block arrays 54L and 54R. Further, rigidity of blocks 30L and 30R constituting second block arrays 26L and 26R respectively may be the same as that of center land portion 24, or at an intermediate level between those of center land portion 24 and shoulder blocks 40. Thus, a pneumatic tire 10 can be obtained in which adequate performance on snow and icy roads and adequate performance on dry/wet roads are effectively achieved at the same time.

In the present embodiment, the sipes formed in center land portion 24 may be 1D sipes (linear sipes) alone, or may be a combination of 1D sipes and 2D sipes. The sipes formed in second blocks 30L and 30R may be 1D sipes alone, a combination of 1D sipes and 2D sipes, a combination of 1D sipes and 3D sipes, or a combination of 2D sipes and 3D sipes. The sipes formed in shoulder blocks 40R and 40L may be a combination of 1D sipes and 3D sipes or a combination of 2D sipes and 3D sipes.

In a pneumatic tire that has a tread section in which a main groove (center main groove) extending in the circumferential direction of the tire is formed on the tire equator surface instead of a center land portion, adequate performance on snow and icy roads and adequate performance on dry/wet roads can be effectively achieved at the same time, as in the present embodiment, by forming the sipes in the block arrays adjacent to both sides of the center main groove to be the same as the sipes in center land portion 24.

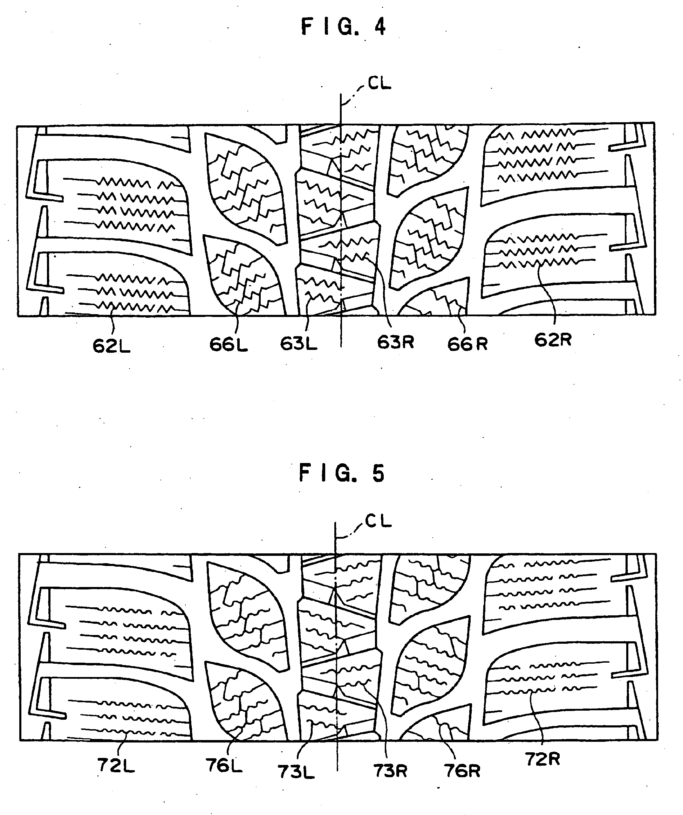

Next, a second embodiment will be described. As shown in Fig. 4, in the present embodiment, different from the first embodiment, all of the 2D sipes 63L and 63R formed in the center land portion, 2D sipes 66L and 66R formed in the second block arrays, and 3D sipes 62L and 62R formed in the shoulder block arrays run in a triangular shape, i.e., in a zigzag manner, on the tread surface.

In this manner, as in the first embodiment, adequate performance on snow and icy roads and adequate performance on dry/wet roads can be effectively achieved at the same time.

Next, a third embodiment will be described. As shown in Fig. 5, in the present embodiment, different from the first embodiment, all of 2D sipes 73L and 73R formed in the center land portion, 2D sipes 76L and 76R formed in the second block arrays, and 3D sipes 72L and 72R formed in the shoulder block arrays run in a trapezoidal shape, i.e., in a staggered manner, on the tread surface.

In this manner, similar effects as those in the first embodiment can be achieved and tread patterns can further be varied.

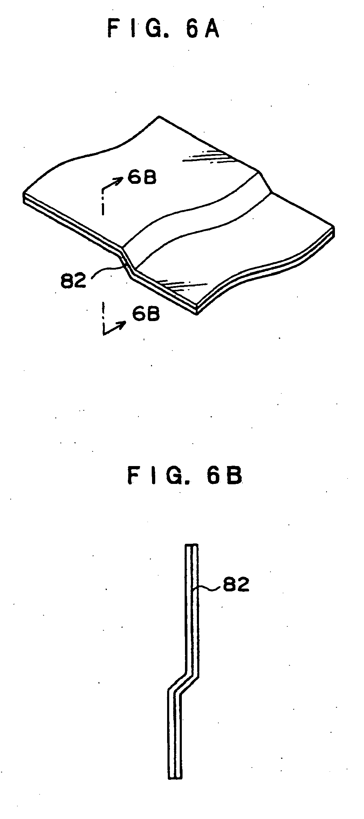

Next, a fourth embodiment will be described. As shown in Figs. 6A and 6B, in the present embodiment, different from the first embodiment, 3D sipes 82 formed in the shoulder block arrays extend in a crank shape along a depth direction of the block.

In this manner, block rigidity of the shoulder blocks is increased. The rigidity ratio of the shoulder blocks with respect to the center blocks and the second blocks may be set larger when needed.

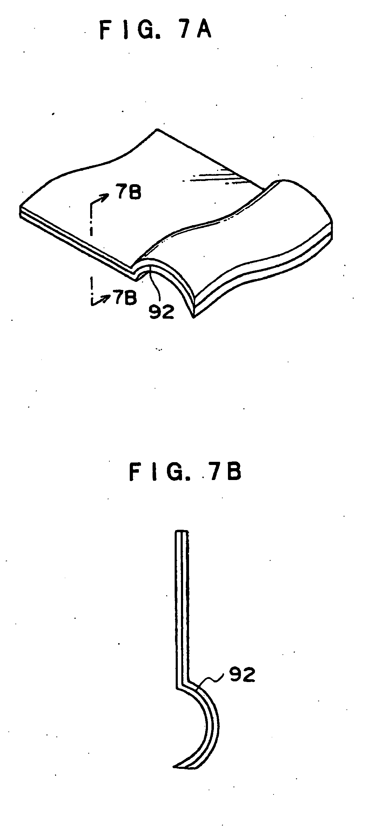

Next, a fifth embodiment will be described. As shown in Figs. 7A and 7B, in the present embodiment, different from the first embodiment, 3D sipes 92 formed in the shoulder block arrays extend as a plane in the depth direction of the block and then extend in a shape of a circular arc, thereby presenting the shape of a roof tile.

In this manner, as in the fourth embodiment, improved shoulder-block rigidity can be obtained.

### Examples

The present inventor conducted several tests on performance on snow and icy roads, performance on dry roads and performance on wet roads for each of the following:
1. a conventional pneumatic tire with zigzag-shaped 2D sipes in the entire block arrays ("conventional pneumatic tire 1");
2. a conventional pneumatic tire with zigzag-shaped 3D sipes in the entire block arrays ("conventional pneumatic tire 2"); and
3. a pneumatic tire according to an example of the first embodiment ("pneumatic tire of Example").

Common test conditions listed below were employed.

Tire size: PXR 205/55R16 91H
Rim size: 7JJX16
Evaluated vehicle: AUDI A4
Tire internal pressure: 240 kPa for both front and rear tires
Tread pattern: four-main groove pattern with center land portion
Shape of 2D sipes: wave pattern
Dimension of 2D sipes: 7.2 mm in pitch and 1.8 mm in amplitude
Shape of 3D sipes: wave pattern along the width direction of the tire, wave pattern along the depth direction of the tire
Dimension of 3D sipes: 5.6 mm in pitch and 1.2 mm in amplitude in width direction of the tire, 2.8 mm in pitch and 1. 2 mm in amplitude along the depth direction of the tire

In the tests, block rigidity of the center land portion of conventional pneumatic tire 1 was referred to as index 100, and rigidity of the second blocks and the shoulder blocks of conventional pneumatic tire 1 and rigidity of blocks of other pneumatic tires were evaluated and represented by relative indices. Evaluated indices are shown in Table 1. In Table 1, higher index indicates higher rigidity.

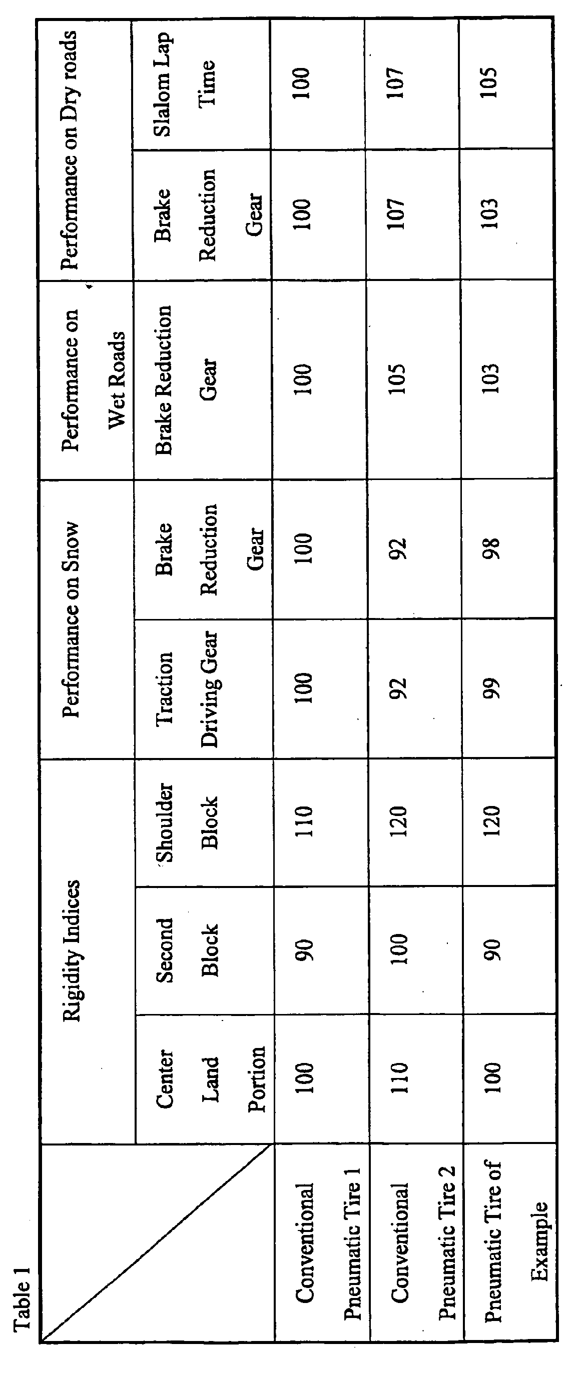

In the tests, performance on snow and icy road was evaluated by conducting the test on snow.

In evaluation of performance of each pneumatic tire, performance of conventional pneumatic tire 1 was measured in view of performance on snow, performance on wet roads and performance on dry roads, and each performance was referred to as index 100. Performance of other pneumatic tires was evaluated and represented by relative indices. Evaluated indices are also shown in Table 1. In Table 1, higher index shows higher performance.

As shown in Table 1, in the pneumatic tire of the Example, performance on wet roads and performance on dry roads were improved with substantial no deterioration in performance on snow. Thus, performance on snow and icy roads (performance on snow) and performance on dry/wet roads were achieved at the same time in the pneumatic tire of the Example.

In conventional pneumatic tire 2, performance on wet roads and performance on dry roads were improved, but performance on snow deteriorated significantly.

While the invention has been described in its embodiments, it is to be understood that the embodiments are examples only, and that many changes can be made thereto without departing from the scope of the invention. Of course, the scope of the invention is not limited to the foregoing embodiments.

As described above, the pneumatic tire according to the invention is suitable for use as a tire in which performance on snow and icy roads and performance on dry/wet roads are effectively achieved at the same time.

## Claims

1. A pneumatic tire (10) in which at least three arrays of land portions are defined in a tread (17) of a tread section (16) along a circumferential direction of the tire by main grooves (20, 22) continuously formed in the circumferential direction of the tire, wherein:
3D sipes (42L, 42R) are formed in land portions (54L, 54R) provided at both tread end sides in a width direction of the tire; and
1D sipes or 2D sipes (36L, 23L, 23R, 36R), or alternatively, sipes comprising a combination of 1D and 2D sipes, are formed in land portions (26L, 24, 26R) provided at a tire equator side with respect to the land portions provided at both tread end sides,
wherein the 1D sipes and the 2D sipes are formed to extend in a diagonal direction with respect to a tire width direction.

2. A pneumatic tire as claimed in claim 1, wherein all of the sipes formed in the land portions at both tread end sides are 3D sipes.

3. A pneumatic tire as claimed in claim 1 or 2, wherein all of the sipes formed in the land portions at the tire equator side with respect to both tread end sides are 2D sipes.

4. A pneumatic tire as claimed in any of claims 1 to 3, wherein the 3D sipes extend in a crank shape in a depth direction of the tire.

5. A pneumatic tire as claimed in claim 1, wherein a part of the 1D sipes and 2D sipes are formed to extend in a first diagonal direction, and a remaining part of the 1D sipes and 2D sipes are formed to extend in a second diagonal direction.

## Patentansprüche

1. Ein Luftreifen (10), in welchem zumindest drei Felder von Landabschnitten in einem Laufstreifen (17) einer Lauffläche (16) definiert sind entlang einer Umfangsrichtung des Reifens durch Hauptnuten (20, 22), die kontinuierlich in der Umfangsrichtung des Reifens gebildet sind, wobei:
3D Sicken (42L, 42R) in Landabschnitten (54L, 54R) gebildet sind, die an beiden Laufstreifenendseiten in einer Breitenrichtung des Reifens bereitgestellt sind; und
1D Sicken oder 2D Sicken (36L, 23L, 23R, 36R), oder alternativ Sicken, die eine Kombination von 1D und 2D Sicken umfassen, die in Landabschnitten (26L, 24, 26R) gebildet sind, die an einer Reifenäquatorialseite in Bezug auf die Landabschnitte bereitgestellt sind, die an beiden Laufstreifenendseiten bereitgestellt sind,
wobei die 1D Sicken und die 2D Sicken gebildet sind, um sich in einer diagonalen Richtung in Bezug auf eine Reifenbreitenrichtung zu erstrecken.

2. Luftreifen nach Anspruch 1, wobei all die Sicken, die in den Landabschnitten an beiden Laufstreifenendseiten gebildet sind, 3D Sicken sind.

3. Luftreifen nach Anspruch 1 oder 2, wobei all die Sicken, die in den Landabschnitten an der Reifenäquatorialseite in Bezug auf beide Laufstreifenendseiten gebildet sind, 2D Sicken sind.

4. Luftreifen nach irgendeinem der Ansprüche 1 bis 3, wobei sich die 3D Sicken in einer Kurbelform in eine Tiefenrichtung des Reifens erstrecken.

5. Luftreifen nach Anspruch 1, wobei ein Teil der 1D Sicken and der 2D Sicken gebildet ist, um sich in eine erste diagonale Richtung zu erstrecken, und ein verbleibender Teil der 1D Sicken und der 2D Sicken gebildet ist, um sich in eine zweite diagonale Richtung zu erstrecken

## Revendications

1. Bandage pneumatique (10), dans lequel au moins trois réseaux de parties d'appui sont définis dans une bande de roulement (17) d'une section de bande de roulement (16), le long d'une direction circonférentielle du bandage pneumatique, par des rainures principales (20, 22), formées de manière continue dans la direction circonférentielle du bandage pneumatique, dans lequel
des lamelles tridimensionnelles (42L, 42R) sont formées dans des parties d'appui (54L, 54R) agencées au niveau des deux côtés d'extrémité de la bande de roulement, dans une direction de la largeur du bandage pneumatique ; et
des lamelles unidimensionnelles ou bidimensionnelles (36L, 23L, 23R, 36R), ou alternativement des lamelles comprenant une combinaison de lamelles unidimensionnelles et de lamelles bidimensionnelles, sont formées dans des parties d'appui (26L, 24, 26R) agencées au niveau d'un côté équatorial du bandage pneumatique par rapport aux parties d'appui agencées au niveau des deux côtés d'extrémité de la bande de roulement ;
les lamelles unidimensionnelles et les lamelles bidimensionnelles étant formées de sorte à s'étendre dans une direction diagonale par rapport à une direction de la largeur du bandage pneumatique.

2. Bandage pneumatique selon la revendication 1, dans lequel toutes les lamelles formées dans les parties d'appui au niveau des deux côtés d'extrémité de la bande de roulement sont des lamelles tridimensionnelles.

3. Bandage pneumatique selon les revendications 1 ou 2, dans lequel toutes les lamelles formées dans les parties d'appui au niveau du côté équatorial du bandage pneumatique par rapport aux deux côtés d'extrémité de la bande de roulement sont des lamelles bidimensionnelles.

4. Bandage pneumatique selon l'une quelconque des revendications 1 à 3, dans lequel les lamelles tridimensionnelles s'étendent en forme de manivelle dans une direction de la profondeur du bandage pneumatique.

5. Bandage pneumatique selon la revendication 1, dans lequel une partie des lamelles unidimensionnelles et des lamelles bidimensionnelles est formée de sorte à s'étendre dans une première direction diagonale, une partie restante des lamelles unidimensionnelles et des lamelles bidimensionnelles étant formée de sorte à s'étendre dans une deuxième direction diagonale.
